# EUROPÄISCHE PATENTSCHRIFT

(11) **EP 1 537 017 B1**
(45) Veröffentlichungstag und Bekanntmachung des Hinweises auf die Patenterteilung: **31.01.2007**
(21) Anmeldenummer: 03750348.9
(22) Anmeldetag: 12.09.2003
(51) Int. Cl.: B63H 21/20, B63B 3/08

(54) **AUSRÜSTUNGSSYSTEM-SCHIFFSTYP "FREGATTE"**
FRIGATE SHIP-TYPE EQUIPMENT SYSTEM
SYSTEME D'EQUIPEMENT POUR BATEAU DE TYPE "FREGATE"

(30) Priorität: 14.09.2002 DE 20214297 U
(43) Veröffentlichungstag der Anmeldung: 08.06.2005
(73) Patentinhaber: SIEMENS AKTIENGESELLSCHAFT, 80333 München (DE)
(72) Erfinder: SCHULZE, Matthias, 21335 Lüneburg (DE); RZADKI, Wolfgang, 21509 Glinde (DE); SADLER, Karl-Otto, 22159 Hamburg (DE); SCHULZE HORN, Hannes, 45966 Gladbeck (DE)
(86) Internationale Anmeldenummer: PCT/DE2003/003034
(87) Internationale Veröffentlichungsnummer: WO 2004/026684

(56) Entgegenhaltungen:
- WO-A-02/057132
- DE-A- 10 019 352
- DE-A- 10 104 892
- US-A- 5 417 597
- DREGER W: "ENTWICKLUNGSTENDENZEN BEIM BAU ZUKUENFTIGER KORVETTEN UND FREGATTEN" SCHIFF UND HAFEN, SEEHAFEN-VERLAG ERIK BLUMENFELD. HAMBURG, DE, Bd. 53, Nr. 4, April 2001 (2001-04), Seiten 47-52, XP001112254 ISSN: 0938-1643
- EHRENBERG H D: "GEBAUTE EINHEITEN UND NEUESTE ENTWICKLUNGEN" SCHIFF UND HAFEN, SEEHAFEN-VERLAG ERIK BLUMENFELD. HAMBURG, DE, Bd. 48, Nr. 12, 1. Dezember 1996 (1996-12-01), Seiten 37-38, XP000641578 ISSN: 0938-1643
- "HOLEBY WINS DESIGN AWARD FOR MODULAR GENSET ENGINE" MARINE ENGINEERS REVIEW, INSTITUTE OF MARINE ENGINEERS. LONDON, GB, 1. April 1996 (1996-04-01), Seite 26 XP000584287 ISSN: 0047-5955
- MAHN B ET AL: "CODAG-ANTRIEBSANLAGE AUF FREGATTE F124" SCHIFF UND HAFEN, SEEHAFEN-VERLAG ERIK BLUMENFELD. HAMBURG, DE, Bd. 50, Nr. 3, 1. März 1998 (1998-03-01), Seiten 61-64, XP000750509 ISSN: 0938-1643
- HIRT M ET AL: "WIRTSCHAFTLICHE UND TECHNISCH OPTIMIERTE GETRIEBE IN FREGATTEN UND KORVETTEN" SCHIFF UND HAFEN, SEEHAFEN-VERLAG ERIK BLUMENFELD. HAMBURG, DE, Bd. 50, Nr. 5, 1. Mai 1998 (1998-05-01), Seiten 61-63, XP000750534 ISSN: 0938-1643
- GAMBLE B. AND GOLDMAN J.: "High temperature superconducting motors and generators for submarines and surface ships" PROCEEDINGS NAVAL SYMPOSIUM ON ELECTRIC MACHINES, 28. - 28. Juli 1997, Seiten 275-282, XP008000614 newport, USA.
- SHARKE P: "THE HUNT FOR COMPACT POWER" GEOPHYSICS, SOCIETY OF EXPLORATION GEOPHYSICISTS.THE AMERICAN SOCIETY OF MECHANICAL ENGINEERING., April 2000 (2000-04), Seite COMPLETE XP008000664 Tulsa , USA ISSN: 0016-8033

## Beschreibung

Die Erfindung bezieht sich auf einen Ausrüstungssystem-Schiffstyp "Fregatte" mit Standard-Ausrüstungs-Segmenten, wie einem Energieerzeuger-, einem Energieverteilungs-, einem Antriebs- und einem Automations-Segment, und mit einem Schiffskörper, der größen- und anforderungsspezifisch an den Ausrüstungssystem-Schiffstyp "Fregatte" angepasst ist.

Aus der WO 02/057132 A1 ist ein Marineschiff bekannt, das so ausgestaltet ist, dass es den gegenwärtigen Anforderungen an Emissionsarmut genügt, wobei darüber hinaus eine hohe Überlebensfähigkeit im Fall von Gefechtsschäden gewährleistet ist.

Weitere standardisierte Marineschiffe sind bekannt aus Dokument US 5417597 und aus dem Stand der Technik Artikel "Schiff und Hafen, vol 48, nr.12, Seiten 37-38, H.D. Ehrenberg, Gebaute Einheiten und neueste Entwicklungen".

Der Erfindung liegt die Aufgabe zugrunde, ausgehend von dem vorstehend geschilderten Stand der Technik einen Ausrüstungssystem-Schiffstyp "Fregatte" mit Standard-Ausrüstungs-Segmenten zu schaffen, der mit einem geringeren technisch-konstruktiven und wirtschaftlichen Aufwand herstellbar ist.

Diese Aufgabe wird erfindungsgemäß gelöst durch die Merkmale des unabhängigen Anspruchs 1, wobei zumindest ein Standard-Ausrüstungs-Segment, wie das Energieerzeuger- und/oder das Energieverteilungs- und/oder das Antriebs- und/oder das Automations-Segment aus Standard-Einheiten bzw. -Komponenten aufgebaut ist, die entsprechend den Anforderungen an den Ausrüstungssystem-Schiffstyp "Fregatte" in dessen Schiffskörper angeordnet und die in Schiffskörpern unterschiedlicher Ausrüstungssystem-Schiffstypen einbaubar sind.

Die erfindungsgemäße Lösung hat zur Folge, dass die einzelnen Komponenten der vorstehend genannten Segmente - aufgrund grö-ßerer möglicher Stückzahlen - mit einem erheblich geringeren technisch-konstruktiven und damit auch wirtschaftlichen Aufwand herstellbar sind. Darüber hinaus ergibt sich aufgrund der Vereinheitlichung der das Energieerzeuger- und/oder das Energieverteilungs- und/oder das Antriebs- und/oder das Automations-Segment des Ausrüstungssystem-Schiffstyp "Fregatte" bildenden Einheiten bzw. Komponenten eine erhebliche Reduzierung der notwendigen Ausbildungs- und Einarbeitungsmaßnahmen.

Dabei weist dessen Antriebs-Segment zwei POD-Antriebs-Segmente und zwei Waterjet-Antriebs-Segmente auf, wobei die beiden ersten vorzugsweise als vollelektrische Leichtgewichts-POD-Antriebe ausgebildet sind, vorzugsweise mit einer Leistung von 6 bis 8, insbesondere 7 MW, und wobei die beiden letzteren vorzugsweise als Twin-Waterjet-Antriebe ausgebildet sind und vorzugsweise eine Leistung von 12 bis 16, insbesondere 14 (2x7) MW, aufweisen.

Das Energieverteilungs-Segment des Ausrüstungssystem-Schiffstyp "Fregatte" gliedert sich weiter in ein brennstoffzellengespeistes Fahrnetz, mittels dem die POD-Antriebs-Segmente mit elektrischer Energie versorgbar sind, und ein generatorgespeistes Fahrnetz, mittels dem die Waterjet-Antriebs-Segmente mit elektrischer Energie versorgbar sind.

Gemäß der Erfindung ist dessen generatorgespeistes Fahrnetz im wesentlichen dem schiffsmittigen, zweiten Schiffssicherungsbereich zugeordnet und mittels geeigneter Kopplungselemente mit dem brennstoffzellengespeisten Fahrnetz verbindbar. Hierdurch wird die Standkraft sowohl des Energieerzeuger-Segments als auch des davon mit elektrischer Energie versorgten Antriebs-Segments des Ausrüstungssystem-Schiffstyp "Fregatte" erheblich erhöht.

Zum Antriebs-Segment kann darüber hinaus ein Querstrahlruder-Segment gehören, das vorzugsweise als 0,5 MW-Bugstrahl-Thruster ausgebildet ist.

Um die POD-Antriebs-Segmente und/oder die Waterjet-Antriebs-Segmente und/oder das Querstrahlruder-Segment möglichst mit geringen Gewichten und Abmessungen zu bauen, ist es zweckmäßig, wenn die Elektromotoren derselben mit Wicklungen aus Hoch-Temperatur-Supraleitern ausgeführt sind.

Gemäß einer weiteren vorteilhaften Ausführungsform des erfindungsgemäßen Ausrüstungssystem-Schiffstyp "Fregatte" sind die Elektromotoren der POD-Antriebs-Segmente und/oder der Waterjet-Antriebs-Segmente und/oder des Querstrahlruder-Segments als Synchronmaschinen mit einer Feldwicklung aus Hoch-Temperatur-Supraleitern und die Ständerwicklungen als Luftspaltwicklungen ausgeführt.

Wenn die Waterjet-Antriebs-Segmente mit einem Koaxial-Abgas-Düsen-Segment ausgerüstet sind, ist es möglich, Abgase von Verbrennungskraftmaschinen, wie z.B. Gasturbinen oder Dieselmotoren, zum Antrieb von elektrischen Energieerzeugungsmaschinen und ggf. weiterer Anlagen, durch die Waterjet-Antriebs-Segmente in das den Ausrüstungssystem-Schiffstyp "Fregatte" umgebende Wasser abzuleiten, so dass die erfassbare Wärmeemission der Ausrüstungssystem-Schiffstyp "Fregatte" erheblich reduziert ist.

Bei einer Ausführungsform des Ausrüstungssystem-Schiffstyp "Fregatte" mit einer Länge über alles von ca. 138 m, einer Breite über alles von ca. 17,5 m und einer Typverdrängung von ca. 5500 to sind seine beiden POD-Antriebs-Segmente zweckmäßigerweise im Achterschiff ca. Spt.7,5 und ca. 5,50 m aus Mitteschiff angeordnet.

Um zu vermeiden, dass sich bei gleichzeitigem Betrieb der POD-Antriebs-Segmente und der Waterjet-Antriebs-Segmente diese unvorteilhaft beeinflussen, beträgt der Abstand in Längsrichtung zwischen der Mitte der POD-Antriebs-Segmente bzw. der Nase ihrer Zugpropeller einerseits und der Wasseraustrittöffnung der Gondeln der Waterjet-Antriebs-Segmente andererseits mindestens 25 m bzw. 22 m, vorteilhaft ca. 35 m bzw. 32 m.

Gemäß einer vorteilhaften Ausführungsform des Schiffskörpers des erfindungsgemäßen Ausrüstungssystem-Schiffstyp "Fregatte" ist ersterer im Hinterschiffsbereich, vorzugsweise bis ca. Spt.26 bis 27, strukturell so ausgeführt, dass mittels ihm das Gewicht der beiden POD-Antriebs-Segmente von jeweils z.B. ca. 65 to und der dazugehörigen Aggregate, wie Umrichter, Steuergeräte etc., von z.B. ca. 20 bis 30 to und die aufgrund des Betriebs der beiden POD-Antriebs-Segmente auftretenden Axialkräfte festigkeitsmäßig aufnehmbar sind.

Wenn das Gewicht der beiden POD-Antriebs-Segmente sowie der dazugehörigen Aggregate von z.B. ca. 150 bis 160 to durch die Anordnung schwerer Ausrüstungsmodule, z.B. eines 32-Cell-Missile-Launcher, im Vorschiffsbereich ausgeglichen ist, kann vermieden werden, dass die Form des Schiffskörpers im Hinterschiffsbereich verbreitert werden muss, so dass eine gravierende Veränderung der Verdrängungskurve vermieden wird.

Das Energieerzeuger-Segment des erfindungsgemäßen Ausrüstungssystem-Schiffstyp "Fregatte" besteht vorteilhaft aus Brennstoffzellen-Segmenten und Generator-Segmenten, wobei als Brennstoffzellen-Segmente vorteilhaft vier luftatmende PEM-Brennstoffzellen und als Generator-Segmente vorteilhaft zwei gasturbinengetriebene Generatoren zum Einsatz kommen. Jede PEM-Brennstoffzelle hat zweckmäßigerweise eine Leistung von ca. 4,5 MW (Netto) bzw. 6 MW (Brutto); die beiden gasturbinengetriebenen Generatoren haben vorteilhaft jeweils eine Leistung von ca. 16 MW.

Um in Notfällen das Anfahren der Brennstoffzellen-Segmente zu sichern, sollte das Energieerzeuger-Segment zusätzlich mit einer entsprechenden Energiekapazität ausgelegte Hochleistungsbatterien aufweisen.

Um die gasturbinengetriebenen Generatoren mit den erforderlichen Abmessungen und dem erforderlichen Gewicht bauen zu können, ist es zweckmäßig, wenn diese Generatoren mit Wicklungen aus Hoch-Temperatur-Supraleitern ausgerüstet sind.

Gemäß einer weiteren vorteilhaften Ausführungsform des erfindungsgemäßen Ausrüstungssystem-Schiffstyp "Fregatte" sind deren Generatoren als Synchronmaschinen mit einer Feldwicklung aus Hoch-Temperatur-Supraleitern ausgeführt, wobei die Ständerwicklung als Luftspaltwicklung ausgeführt ist.

Zur Wasserstoffversorgung der vier luftatmenden PEM-Brennstoffzellen sind zweckmäßigerweise zwei Dieselreformer mit einer Leistung von je ca. 9 MW vorgesehen.

Zur Erhöhung der Standkraft des Ausrüstungssystem-Schiffstyp "Fregatte" ist es vorteilhaft, wenn dessen Energieerzeuger-Segment über mehrere Schiffssicherungsbereiche des Ausrüstungssystem-Schiffstyp "Fregatte" verteilt ist.

Zweckmäßigerweise ist ein erstes E-Werk mit zwei luftatmenden PEM-Brennstoffzellen in einem heckseitigen ersten Schiffssicherungsbereich, vorzugsweise nahe dem Übergang zu einem schiffsmittigen, zweiten Schiffssicherungsbereich angeordnet.

Entsprechend kann ein zweites E-Werk, das sich in einen heckseitigen E-Werkabschnitt mit zwei Gasturbinen und einen bugseitigen E-Werkabschnitt mit den Generatoren gliedert, in einem schiffsmittigen, zweiten Schiffssicherungsbereich angeordnet sein.

Der heckseitige und der bugseitige E-Werkabschnitt des zweiten E-Werks sind vorteilhaft in benachbarten Abteilungen des schiffsmittigen, zweiten Schiffssicherungsbereichs angeordnet.

Vorteilhaft wiederum davon räumlich getrennt ist ein drittes E-Werk mit zwei luftatmenden PEM-Brennstoffzellen in einem zwischen dem zweiten, schiffsmittigen Schiffssicherungsbereich und einem bugseitigen Schiffssicherungsbereich angeordneten dritten Schiffssicherungsbereich angeordnet, vorzugsweise nahe dem Übergang zum schiffsmittigen, zweiten Schiffssicherungsbereich.

Eine erste Dieselreformerzentrale mit einem Dieselreformer kann im schiffsmittigen, zweiten Schiffssicherungsbereich angeordnet werden, wobei sie vorzugsweise in derjenigen Abteilung des zweiten Schiffssicherungsbereichs sich befinden kann, in dem auch der bugseitige E-Werkabschnitt des zweiten E-Werks vorgesehen ist.

Getrennt hiervon ist eine zweite Dieselreformerzentrale mit einem Dieselreformer angeordnet, und zwar im zwischen dem schiffsmittigen, zweiten Schiffssicherungsbereich und dem bugseitigen Schiffssicherungsbereich angeordneten dritten Schiffssicherungsbereich, vorzugsweise nahe dem Übergang zum bugseitigen Schiffssicherungsbereich.

Die POD-Antriebs-Segmente des Ausrüstungssystem-Schiffstyp "Fregatte" sind vorteilhaft für eine Marschfahrt derselben mit einer Geschwindigkeit bis zu ca. 22 kn ausgelegt und werden in diesem Betriebszustand mittels der Brennstoffzellen-Segmente mit elektrischer Energie versorgt.

Dahingegen sind die Waterjet-Antriebs-Segmente gemäß einer weiteren vorteilhaften Ausführungsform des erfindungsgemäßen Ausrüstungssystem-Schiffstyp "Fregatte" für eine Höchstfahrt derselben, die z.B. mit einer Geschwindigkeit von ca. 26 kn erfolgen kann, ausgelegt, und werden in diesem Betriebszustand mittels der beiden Generatoren mit elektrischer Energie versorgt.

Zum emissionsarmen Anfahren der Waterjet-Antriebs-Segmente sind diese vorteilhaft aus zumindest einem Brennstoffzellen-Segment bis zur Erreichung der Leistungsgrenze des bzw. der Brennstoffzellen-Segmente mit elektrischer Leistung versorgbar.

Zur Optimierung der erzielbaren Geschwindigkeit des Ausrüstungssystem-Schiffstyp "Fregatte" und des Energieverbrauchs desselben werden bei einem gleichzeitigen Betrieb der POD-Antriebs-Segmente und der Waterjet-Antriebs-Segmente, bei dem Geschwindigkeiten > 30 kn erreicht werden können, die Verteilung der mittels des Energieerzeuger-Segments erzeugten elektrischen Energie zweckmäßigerweise mittels des Energieverteilungs-Segments und eines Energiemanagements eines Automation-Trägersystem-Schiff wirkungsgrad-optimiert realisiert.

Das brennstoffzellengespeiste Fahrnetz hat vorteilhaft einen hecksseitigen Netzabschnitt, der im wesentlichen dem heckseitigen, ersten Schiffssicherungsbereich zugeordnet ist, und einen bugseitigen Netzabschnitt, der im wesentlichen dem dritten Schiffssicherungsbereich zugeordnet und über geeignete Kopplungselemente mit dem heckseitigen Netzabschnitt verbindbar ist.

Wenn ein im bugseitigen Schiffssicherungsbereich angeordneter Hilfsantrieb mittels des bugseitigen Netzabschnitts des brennstoffzellengespeisten Fahrnetzes mit elektrischer Energie versorgbar ist, kann dieser Hilfsantrieb in Verbindung mit dem bugseitig angeordneten Querstrahlruder-Segment des Antriebs-Segments dafür Sorge tragen, dass der erfindungsgemäße Ausrüstungssystem-Schiffstyp "Fregatte" - stark beschädigt - weiterhin mit einer, wenn auch vergleichsweise geringen, Geschwindigkeit bewegbar und manövrierfähig bleibt.

Weitere Bordnetzverbraucher, z.B. Waffensystemeinheiten des erfindungsgemäßen Ausrüstungssystem-Schiffstyp "Fregatte" sind aus dem gesamten Energieerzeuger-Segment vorteilhaft mittels des brennstoffzellengespeisten Fahrnetzes mit elektrischer Energie versorgbar.

Zum Anschluss der vorhandenen Schiffsbetriebstechnik an die beiden Fahrnetze kann es zweckmäßig sein, wenn Niederspannungs-E-Werke vorgesehen sind, die in unterschiedlichen Schiffssicherungsbereichen angeordnet, an das jeweils zugeordnete Fahrnetz angeschlossen und mittels geeigneter Kopplungselemente untereinander verbindbar sind.

Um den Betrieb des Energieerzeuger-, des Energieverteilungs- und des Antriebs-Segments des Ausrüstungssystem-Schiffstyp "Fregatte" zu optimieren, gehört vorteilhaft zu deren Automations-Segment, das in Form eines Automation-Trägersystem-Schiff ausgebildet ist, eine eine Vielzahl Terminals aufweisende Automations-Zentrale mit einem Terminalbus und eine Mehrzahl Server, die an den Terminalbus und an einen Systembus angeschlossen sind, an den unterschiedlichen Schiffssicherungsbereichen zugeordnete Steuernetze angeschlossen sind.

Ein im wesentlichen dem heckseitigen, ersten Schiffssicherungsbereich zugeordnetes erstes Steuernetz dient zweckmäßigerweise dazu, die beiden POD-Antriebs-Segmente, die beiden achtern angeordneten Brennstoffzellen-Segmente, den achtern angeordneten Dieselreformer und die im heckseitigen ersten Schiffssicherungsbereich vorgesehene Schiffsbetriebstechnik zu steuern und zu überwachen.

Ein im Wesentlichen dem schiffsmittigen, zweiten Schiffssicherungsbereich zugeordnetes zweites Steuernetz kann dazu dienen, die beiden Generatoren, die beiden Waterjet-Antriebs-Segmente und die im schiffsmittigen, zweiten Schiffssicherungsbereich vorgesehene Schiffsbetriebstechnik zu steuern und zu überwachen.

Entsprechend können mittels eines im wesentlichen dem dritten und dem bugseitigen Schiffssicherungsbereich zugeordneten dritten Steuernetzes die beiden vorne angeordneten Brennstoffzellen-Segmente, der vorne angeordnete Dieselreformer, das Querstrahlruder-Segment und die im dritten und bugseitigen Schiffssicherungsbereich vorgesehene Schiffsbetriebstechnik gesteuert und überwacht werden.

Im folgenden wird die Erfindung anhand einer Ausführungsform unter Bezugnahme auf die Zeichnung näher erläutert.

Es zeigen:
- FIGUR 1: eine Längsschnittdarstellung einer Ausführungsform eines erfindungsgemäßen Ausrüstungssystem-Schiffstyp "Fregatte";
- FIGUR 2: eine FIGUR 1 entsprechende Darstellung des erfindungsgemäßen Ausrüstungssystem-Schiffstyp "Fregatte" mit dessen Schiffssicherungsbereichen und Abteilungen;
- FIGUR 3: eine Prinzipdarstellung der Energieverteilung und der Bordstromversorgung des in den FIGUREN 1 und 2 dargestellten erfindungsgemäßen Ausrüstungssystem-Schiffstyp "Fregatte"; und
- FIGUR 4: eine Automations-Zentrale des in den FIGUREN 1 und 2 dargestellten erfindungsgemäßen Ausrüstungssystem-Schiffstyp "Fregatte".

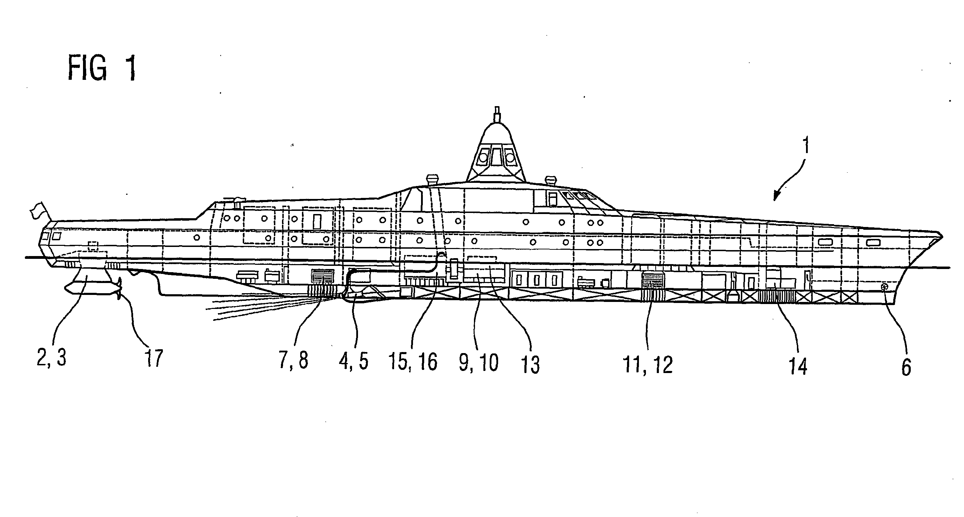

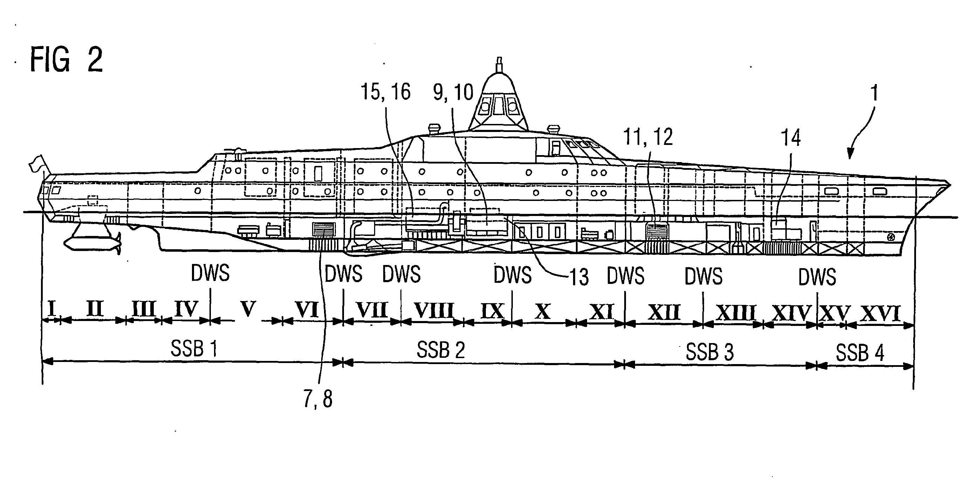

Eine in den FIGUREN 1 und 2 in Längsschnittdarstellung gezeigt Ausführungsform eines erfindungsgemäßen Ausrüstungssystem-Schiffstyp "Fregatte" hat einen Schiffskörper 1, der entsprechend dem Ausrüstungssystem-Schiffstyp "Fregatte" ausgelegt und bemessen ist.

Im gezeigten Ausführungsbeispiel hat der Ausrüstungssystem-Schiffstyp "Fregatte" eine Länge über alles von ca. 138 m, eine Länge in der Kielwasserlinie von ca. 132 m, eine Breite über alles von ca. 17,5 m, eine Breite in der Kielwasserlinie von ca. 16,7 m, einen konstr. Tiefgang von ca. 4,95 m, einen maximalen Tiefgang von 6,5 m, eine Typverdrängung von ca. 5500 to und eine maximale Geschwindigkeit oberhalb von 30 kn.

Im Schiffskörper 1 sind Standard-Ausrüstungs-Segmente wie ein Energieerzeuger-Segment, ein Energieverteilungs-Segment, ein Antriebs-Segment und ein Automations-Segment aus Standard-Einheiten bzw. -Komponenten gemäß den Anforderungen an den Ausrüstungssystem-Schiffstyp "Fregatte" angeordnet.

Die einzelnen Einheiten, durch die die genannten Segmente gebildet bzw. zusammengestellt werden, sind als standardisierte, vorfertigbare Einheiten ausgebildet. Sie können anstelle im im Folgenden geschilderten Ausrüstungssystem-Schiffstyp "Fregatte" auch im Zusammenhang mit anderen Ausrüstungssystem-Schiffstypen eingesetzt werden.

Für den Ausrüstungssystem-Schiffstyp "Fregatte" mit seiner Typverdrängung von ca. 5500 to und einer angenommenen Maximalgeschwindigkeit oberhalb von 30 kn besteht in der dargestellten Ausführungsform das Antriebs-Segment aus zwei POD-Antriebs-Segmenten 2, 3 und zwei Waterjet-Antriebs-Segmenten 4, 5. Zusammen bilden diese eine sog. COPAW (Combined Pod and Waterjet) Antriebsanlage, die zudem vollelektrisch ausgebildet ist. Zum Antriebs-Segment gehört auch ein Querstrahlruder-Segment 6, welches nahe dem Bug des Schiffskörpers 1 angeordnet ist.

Bei den beiden POD-Antriebs-Segmenten 2, 3 handelt es sich um für Marinezwecke ausgelegte Leichtgewichts-POD-Antriebe mit einer Leistung von jeweils 7 MW. Mit diesen POD-Antriebs-Segmenten 3, 4 kann sich der Ausrüstungssystem-Schiffstyp "Fregatte" in Marschfahrt bis zu einer Geschwindigkeit von 22 kn bewegen, wodurch eine geräusch- und emissionsarme Dauermarschfahrt realisiert wird. Die beiden Leichtgewichts-POD-Antriebe 2, 3 sind jeweils mit einem Elektromotor mit Wicklungen aus Hoch-Temperatur-Supraleitern ausgerüstet. Hierdurch kann bei der je POD-Antriebs-Segment 2, 3 vorgegebenen Leistung von 7 MW ein Gewicht von 65 to je POD-Antriebs-Segment 2, 3 eingehalten werden.

Die elektrische Energie für die beiden POD-Antriebs-Segmente 2, 3 wird durch später beschriebene Brennstoffzellen-Segmente 7, 8, 11, 12 erzeugt. Diese Brennstoffzellen-Segmente 7, 8, 11, 12 sind für den vorstehend geschilderten Geschwindigkeitsbereich ausgelegt.

Im Zuge getätigter Untersuchungen hat sich herausgestellt, dass ein der vorstehend geschilderten Dauermarschfahrt entsprechendes Fahrprofil über ca. 80 % der Lebens- bzw. Fahrzeit des Ausrüstungssystem-Schiffstyp "Fregatte" angesetzt werden kann.

Für einen oberhalb von 22 kn liegenden Geschwindigkeitsbereich weist das Antriebs-Segment die beiden vorstehend genannten Waterjet-Antriebs-Segmente 4, 5 auf. Jedes dieser beiden Waterjet-Antriebs-Segmente 4, 5 ist als Twin-Waterjet-Antrieb ausgebildet, im gezeigten Ausführungsbeispiel als Twin-Waterjet-Antrieb mit einer Leistung von 14 MW. Mittels der beiden Twin-Waterjet-Antriebe 4, 5 lässt sich eine Geschwindigkeit des Ausrüstungssystem-Schiffstyp "Fregatte" bis zu 26 kn erreichen. Jeder der beiden Twin-Waterjet-Antriebe 4, 5 hat zwei Elektromotoren mit Wicklungen aus Hoch-Temperatur-Supraleitern und einer Leistung von jeweils 7 MW. Die elektrische Energie für den Betrieb der beiden Twin-Waterjet-Antriebe 4, 5 wird durch zwei später beschriebene Generatoren 9, 10 erzeugt.

Das Fahrprofil mit einer Geschwindigkeit des Ausrüstungssystem-Schiffstyp "Fregatte" oberhalb von 22 kn und bis zu 26 kn wird über ca. 15 % der Lebens- bzw. Fahrzeit des Ausrüstungssystem-Schiffstyp "Fregatte" angesetzt.

In einem Geschwindigkeitsbereich, der oberhalb von 26 kn liegt und sich bis oberhalb von 30 kn erstrecken kann, werden den beiden Waterjet-Antriebs-Segmenten 4, 5 die beiden POD-Antriebs-Segmente 2, 3 zugeschaltet. In diesem Betriebszustand werden für die Erzeugung der elektrischen Energie sowohl die beiden Generatoren 9, 10 als auch die vorstehend bereits erwähnten Brennstoffzellen-Segmente 7, 8, 11, 12, die später noch beschrieben werden, eingesetzt.

Das Fahrprofil in diesem maximalen Geschwindigkeitsbereich wird über ca. 5 % der Lebens- bzw. Fahrzeit des Ausrüstungssystem-Schiffstyp "Fregatte" angesetzt.

Für das Energieerzeuger-Segment des vorstehend geschilderten Ausrüstungssystem-Schiffstyp "Fregatte" wird eine Brutto-Energieerzeugung für die gesamte Bordstromversorgung von ca. 56 MW zugrunde gelegt. Die hieraus resultierende Netto-Energieleistung von ca. 46 MW dient für den Betrieb der vorstehend geschilderten COPAW-Antriebsanlage, die bei Höchstfahrt im maximalen Geschwindigkeitsbereich oberhalb 30 kn ca. 42 MW benötigt, für den Bordbetrieb inkl. Waffen- und Elektronikanlagen, für den ca. 2 MW benötigt werden, und als Reserve in Höhe von 2 MW für Nachrüstungen, z.B. von nichtlethalen oder Hochenergielaserwaffen.

Zu dem Energieerzeuger-Segment gehören die vier vorstehend bereits genannten Brennstoffzellen-Segmente 7, 8, 11, 12 und Generatoren 9, 10. Darüber hinaus sind dem Energieerzeuger-Segment in den FIGUREN nicht dargestellte Hochleistungsbatterien zuzuordnen, die eine Energiekapazität bereitstellen, deren Leistung ausreichend ist, um die Brennstoffzellen-Segmente 7, 8, 11, 12 anzufahren.

Die Brennstoffzellen-Segmente 7, 8, 11, 12 sind als luftatmende PEM-Brennstoffzellen ausgebildet. Jede der vier PEM-Brennstoffzellen 7, 8, 11, 12 hat eine Netto-Energieleistung von ca. 4,5 MW, was einer Brutto-Energieleistung von ca. 6 MW entspricht. Mittels der im Schiffskörper achtern und vorne angeordneten luftatmenden PEM-Brennstoffzellen 7, 8, 11, 12 wird die elektrische Energie für den geräuscharmen und umweltfreundlichen Betriebszustand bis zu einer Geschwindigkeit von ca. 22 kn zur Verfügung gestellt, in dem die beiden POD-Antriebs-Segmente 2, 3 von den genannten PEM-Brennstoffzellen 7, 8, 11, 12 mit elektrischer Energie versorgt werden.

Für die Wasserstoffversorgung der Brennstoffzellen-Segmente 7, 8, 11, 12 sind zwei Dieselreformer 13, 14 vorgesehen. Jeder dieser beiden Dieselreformer 13, 14 hat eine Leistung von ca. 9 MW.

Die beiden Generatoren 9, 10 des Energieerzeuger-Segments werden jeweils mittels einer Gasturbine 15, 16 angetrieben. Die beiden Generatoren 9, 10 sind als Drehstromgeneratoren mit Wicklungen aus Hoch-Temperatur-Supraleitern ausgebildet und haben jeweils eine Leistung von ca. 16 MW, die ausreichend ist, um die vier Elektromotoren der beiden Twin-Waterjet-Antriebe 4, 5 mit elektrischer Energie zu versorgen. Durch den Einsatz von Wicklungen aus Hoch-Temperatur-Supraleitern lassen sich die Generatoren 9, 10 mit erheblich kleineren Baugrößen und Gewichten realisieren als herkömmlich hergestellte Generatoren der entsprechenden Leistungsklasse.

Wie insbesondere aus FIGUR 2 hervorgeht, gliedert sich der Schiffskörper 1 des Ausrüstungssystem-Schiffstyp "Fregatte" in der hier gezeigten Ausführungsform in vier Schiffssicherungsbereiche, nämlich den heckseitigen, ersten Schiffssicherungsbereich SSB-1, den schiffsmittigen, zweiten Schiffssicherungsbereich SSB-2, den dritten Schiffssicherungsbereich SSB-3 und den bugseitigen, vierten Schiffssicherungsbereich SSB-4.

Zum ersten Schiffssicherungsbereich SSB-1 gehören im gezeigten Ausführungsbeispiel des Ausrüstungssystem-Schiffstyp "Fregatte" die Abteilungen I - VI, zum zweiten Schiffssicherungsbereich SSB-2 die Abteilungen VII - XI, zum dritten Schiffssicherungsbereich SSB-3 die Abteilungen XII - XIV und zum vierten Schiffssicherungsbereich SSB-4 die Abteilungen XV und XVI.

Bei dem gezeigten Ausführungsbeispiel des Ausrüstungssystem-Schiffstyp "Fregatte" sind die beiden Leichtgewichts-POD-Antriebe 2, 3 im ersten Schiffssicherungsbereich SSB-1, d.h. im Achterschiff, ca. Spt.7,5 und ca. 5,5 m aus Mitte Schiff angeordnet, und zwar in der Abteilung II.

Der Abstand zwischen der Mitte der Leichtgewichts-POD-Antriebe 2, 3 bzw. den Nasen der Zugpropeller 17 der beiden Leichtgewichts-POD-Antriebe 2, 3 einerseits und den Wasseraustrittsöffnungen der Gondeln der beiden Twin-Waterjet-Antriebe 4, 5 andererseits beträgt - in Längsrichtung des Schiffskörpers 1 gesehen - ca. 35 m bzw. ca. 32 m.

Im Hinterschiffsbereich ist der Schiffskörper 1 bis ca. Spt.26 und 27 in seiner Struktur entsprechend der Gewichte der beiden Leichtgewichts-POD-Antriebe 2, 3, die jeweils ca. 65 to wiegen, ausgelegt, wobei die zusätzlichen Gewichte für die den beiden Leichtgewichts-POD-Antrieben 2, 3 zugeordneten Umrichter, Steuergeräte etc. von ca. 20 bis 30 to, d.h. ein Gesamtgewicht, welches den beiden Leichtgewichts-POD-Antrieben 2, 3 zuzurechnen ist, von ca. 150 bis 160 to berücksichtigt ist. Des weiteren muss bei der Auslegung des Schiffskörpers 1 im Hinterschiffsbereich berücksichtigt werden, dass die im Betrieb der beiden Leichtgewichts-POD-Antriebe 2, 3 auftretenden Axialkräfte festigkeitsmäßig aufgenommen werden müssen.

Das im Achterschiff aufgrund der dortigen Installation der beiden Leichtgewichts-POD-Antriebe 2, 3 installierte Gewicht von ca. 150 bis 160 to wird durch die Anordnung entsprechend gewichtiger Ausrüstungsmodule, z.B. eines 32-Cell-Missile-Launcher im Vorschiffsbereich gewichtsmäßig ausgeglichen. Deshalb ist es nicht erforderlich, dass der Schiffskörper 1 im Hinterschiffsbereich verbreitert werden muss. Durch diese optimale Anordnung der Standard-Ausrüstungs-Segmente kann eine günstige Schiffsgestaltung erreicht werden. Es ergibt sich eine vorteilhafte Widerstandskennlinie der Schiffsform und die Vortriebskraft für die geforderten Geschwindigkeiten wird dabei reduziert.

Die dem Energieerzeuger-Segment zuzurechnenden Brennstoffzellen-Segmente 7, 8, 11, 12, Generatoren 9, 10, Gasturbinen 15, 16 und Dieselreformer 13, 14 des Ausrüstungssystem-Schiffstyp "Fregatte" sind in drei separat angeordneten E-Werken, verteilt im Schiffskörper 1, angeordnet.

Ein erstes E-Werk umfasst die beiden achtern angeordneten Brennstoffzellen-Segmente 7, 8 und ist in der Abteilung VI des heckseitigen, ersten Schiffssicherungsbereichs SSB-1 angeordnet.

Die beiden Gasturbinen 15, 16, die über Untersetzungsgetriebe mit den beiden Generatoren 9, 10 verbunden sind, bilden mit diesen ein zweites E-Werk, das sich in einen heckseitigen E-Werkabschnitt mit den beiden Gasturbinen 15, 16 und einen bugseitigen E-Werkabschnitt mit den beiden Generatoren 9, 10 gliedert. Der die beiden Gasturbinen 15, 16 aufweisende heckseitige E-Werkabschnitt beinhaltet auch die Untersetzungsgetriebe und ist im schiffsmittigen, zweiten Schiffssicherungsbereich SSB-2, und zwar in der Abteilung VIII desselben, angeordnet; der die beiden Generatoren 9, 10 aufnehmende bugseitige E-Werkabschnitt ist in der benachbarten Abteilung IX desselben Schiffssicherungsbereichs SSB-2 angeordnet. Die Abteilungen VIII und IX können durch Doppelwandschotte geschützt sein.

Ein drittes E-Werk umfasst die beiden vorne angeordneten Brennstoffzellen-Segmente 11, 12, die ebenfalls als luftatmende PEM-Brennstoffzellen ausgebildet sind. Dieses dritte E-Werk ist im zwischen dem schiffsmittigen, zweiten Schiffssicherungsbereich SSB-2 und dem bugseitigen, vierten Schiffssicherungsbereich SSB-4 angeordneten dritten Schiffssicherungsbereich SSB-3 angeordnet, und zwar in dessen Abteilung XII.

Eine erste Dieselreformer-Zentrale, in der der achtern angeordnete Dieselreformer 13 angeordnet ist, ist gemeinsam mit dem bugseitigen E-Werkabschnitt des zweiten E-Werks in Abteilung IX des schiffsmittigen, zweiten Schiffssicherungsbereichs SSB-2 angeordnet. Eine den vorne angeordneten Dieselreformer 14 aufnehmende weitere Dieselreformer-Zentrale ist in Abteilung XIV des dritten Schiffssicherungsbereichs SSB-3 angeordnet. Durch die räumliche Verteilung der drei E-Werke und der beiden Dieselreformer-Zentralen auf drei unterschiedliche Schiffssicherungsbereiche ergibt sich eine maximale Standkraft des Ausrüstungssystem-Schiffstyp Fregatte".

Es sei darauf hingewiesen, dass die beiden Dieselreformer 13, 14 in solchen Bereichen des Schiffskörpers 1 angeordnet sind, in denen üblicherweise zwei Deckshöhen vorgesehen sind, da derartige Dieselreformer 13, 14 derzeit etwa 3,5 m hoch bauen.

Durch die räumliche Trennung der beiden POD-Antriebs-Segmente 2, 3 voneinander und von den ihrerseits räumlich voneinander getrennten beiden Waterjet-Antriebs-Segmenten 4, 5 in Verbindung mit der redundanten Energieversorgung durch die drei vorstehend geschilderten, auf drei Schiffssicherungsbereiche SSB-1, SSB-2 und SSB-3 verteilten E-Werke, die die vier Brennstoffzellen-Segmente 7, 8, 11, 12 und die beiden gasturbinengetriebenen Generatoren 9, 10 aufnehmen, wird eine wesentliche Standkrafterhöhung für das Antriebs-Segment des Ausrüstungssystem-Schiffstyp "Fregatte" erzielt.

Mittels der beiden POD-Antriebs-Segmente 2, 3 und/oder mittels der beiden Waterjet-Antriebs-Segmente 4, 5 können insbesondere mit dem als 0,5 MW-Bugstrahl-Thruster ausgebildeten Querstrahlruder-Segment 6 beliebige Steuer- bzw. Rudermanöver durchgeführt werden.

Sowohl die beiden POD-Antriebs-Segmente 2,3 als auch die beiden Waterjet-Antriebs-Segmente 4,5 sind hinsichtlich ihrer Leistung stufenlos regelbar. Stopp- und Rückwärts-Manöver können sowohl durch eine Schubstrahlumlenkung der Waterjet-Antriebs-Segmente 4, 5 als auch durch Drehen der POD-Antriebs-Segmente 2, 3 realisiert werden.

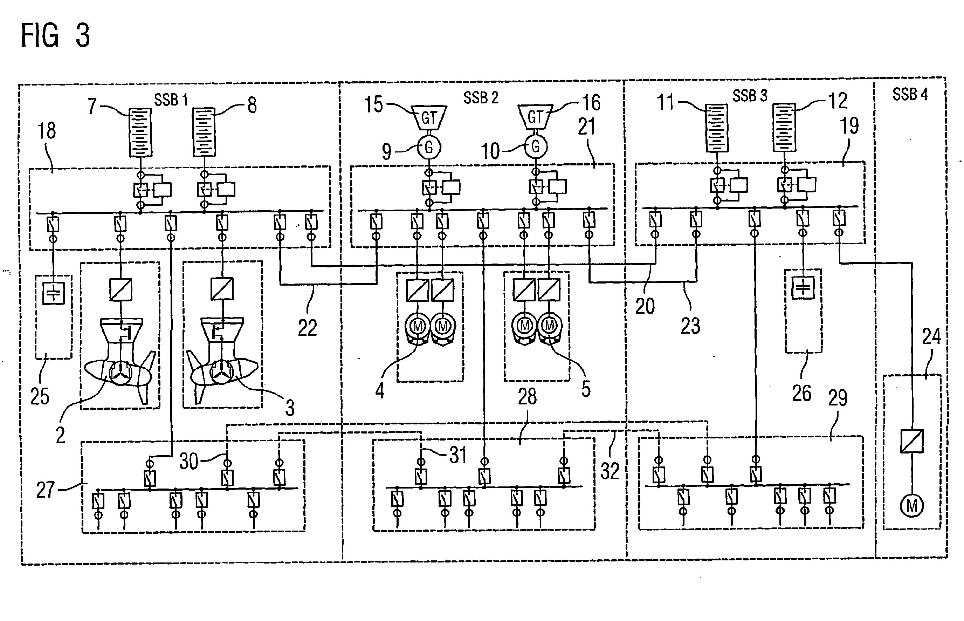

Aufgrund der Kombination der Energieerzeugung aus den Brennstoffzellen-Segmenten 7, 8, 11, 12 und den gasturbinengetriebenen Generatoren 9, 10 und der daraus resultierenden Einbindung zweier unterschiedlicher Spannungssysteme in ein DC- und ein AC-Netz wird das Energieverteilungs-Segment, das in FIGUR 3 gezeigt ist, wie folgt gestaltet:

Zum Energieverteilungs-Segment gehört ein brennstoffzellengespeistes Fahrnetz 18, 19, welches sich im dargestellten Ausführungsbeispiel, wie dies in FIGUR 3 gezeigt ist, in einen heckseitigen Netzabschnitt 18 und einen bugseitigen Netzabschnitt 19 gliedert.

Der heckseitige Netzabschnitt 18 ist im wesentlichen dem heckseitigen, ersten Schiffssicherungsbereich SSB-1 zugeordnet. Bei Marschfahrt des Ausrüstungssystem-Schiffstyps "Fregatte" bis zu 22 kn werden die beiden POD-Antriebs-Segmente 2, 3 durch diesen Netzabschnitt 18 und den bugseitigen Netzabschnitt 19 mit elektrischer Energie versorgt. In den Netzabschnitt 18 speisen die beiden im ersten E-Werk achtern angeordneten Brennstoffzellen-Segmente 7, 8 ein. In den bugseitigen Netzabschnitt 19 speisen die beiden vorne im dritten E-Werk angeordneten Brennstoffzellen-Segmente 11, 12 ein.

Die beiden Netzabschnitte 18, 19 des brennstoffzellengespeisten Fahrnetzes sind über geeignete Kopplungselemente 20 miteinander verbindbar.

Des weiteren ist ein generatorgespeistes Fahrnetz 21 vorgesehen, welches im wesentlichen dem schiffsmittigen, zweiten Schiffssicherungsbereich SSB-2 zugeordnet ist. In dieses zweite Fahrnetz speisen die im zweiten E-Werk vorgesehenen Generatoren 9, 10 ein. Das generatorgetriebene Fahrnetz 21 dient im Geschwindigkeitsbereich des Ausrüstungssystem-Schiffstyp "Fregatte" zwischen 22 kn und etwa 26 kn dazu, die beiden Waterjet-Antriebs-Segmente 4, 5 mit elektrischer Energie zu versorgen. Mittels geeigneter Kopplungselemente 22, 23 ist das generatorgetriebene Fahrnetz 21 an die beiden Netzabschnitte 18, 19 des brennstoffzellengetriebenen Fahrnetzes anschließbar.

Ein im bugseitigen Schiffssicherungsbereich SSB-4 angeordneter Hilfsantrieb 24 wird durch das brennstoffzellengetriebene Fahrnetz, insbesondere durch dessen bugseitigen Netzabschnitt 19, mit elektrischer Energie versorgt. Mittels des Hilfsantriebs 24 wird das Querstrahlruder-Segment 6 angetrieben. Es ist eine Ausgestaltung des Querstrahlruder-Segments 6 möglich, z.B. als ausfahrbarer Ruderpropeller mit den Funktionen eines sogenannten "Coming Home"-Antriebs, bei der dieses bei Ausfall der weiteren Einheiten des Antriebs-Segments ausreichend ist, um den Ausrüstungssystem-Schiffstyp "Fregatte" unter bestimmten Umständen mit einer vergleichsweise geringen Geschwindigkeit zu bewegen und zu manövrieren.

In FIGUR 3 sind des Weiteren eine achtern angeordnete Waffensystemeinheit 25 und eine vorne angeordnete Waffensystemeinheit 26 gezeigt, die den Schiffssicherungsbereichen SSB-1 bzw. SSB-3 zugeordnet sind und die entsprechend aus dem heckseitigen Netzabschnitt 18 bzw. dem bugseitigen Netzabschnitt 19 des brennstoffzellengetriebenen Fahrnetzes mit elektrischer Energie versorgt werden.

Des Weiteren ist in jedem der Schiffssicherungsbereiche SSB-1, SSB-2 und SSB-3 ein Niederspannungs-E-Werk 27, 28, 29 vorgesehen. Das im heckseitigen, ersten Schiffssicherungsbereich vorgesehene Niederspannungs-E-Werk 27 ist unmittelbar an den heckseitigen Netzabschnitt 18, das im dritten Schiffssicherungsbereich SSB-3 vorgesehene Niederspannungs-E-Werk 29 ist unmittelbar an den bugseitigen Netzabschnitt 19 des brennstoffzellengetriebenen Fahrnetzes 18 angeschlossen; das im schiffsmittigen, zweiten Schiffssicherungsbereich SSB-2 angeordnete Niederspannungs-E-Werk 28 ist unmittelbar an das generatorgetriebene Fahrnetz 21 angeschlossen.

Mittels geeigneter Kopplungselemente 30, 31 bzw. 32 sind die beiden Niederspannungs-E-Werke 27 und 29 untereinander und mit dem Niederspannungs-E-Werk 28 verbunden.

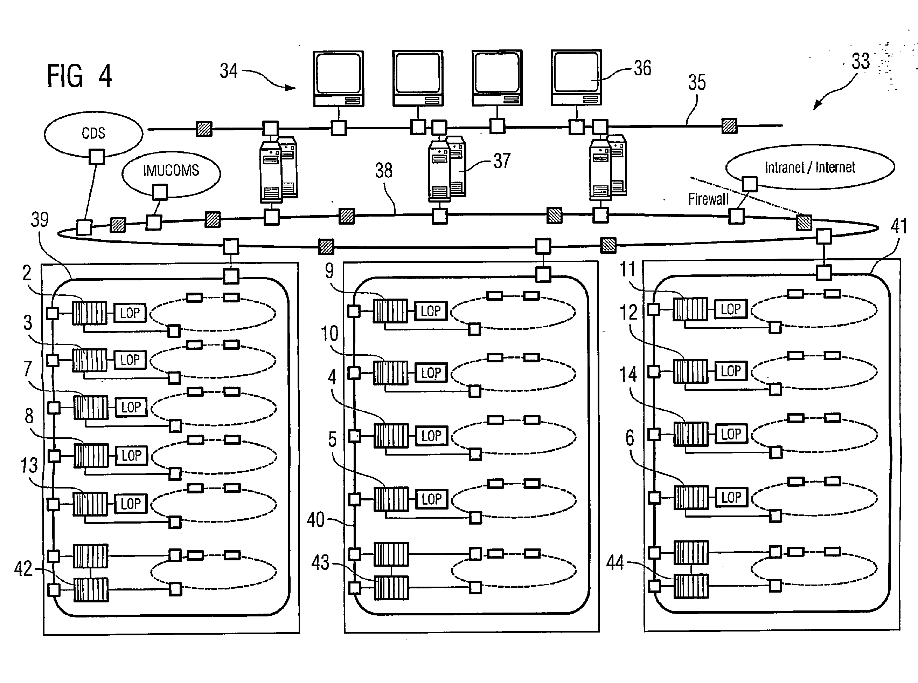

Um die Energieverteilung der von der COPAW-Antriebsanlage benötigten elektrischen Leistung zwischen den beiden POD-Antriebs-Segmenten 2, 3 und den beiden Waterjet-Antriebs-Segmenten 4, 5 nach wirkungsgrad-optimierten Gesichtspunkten realisieren zu können, ist ein intelligentes Energie-Management vorgesehen, welches durch das in FIGUR 4 im Prinzip gezeigte Automation-Trägersystem-Schiff 33 zur Verfügung gestellt wird, welches das Automations-Segment des Ausrüstungssystem-Schiffstyp "Fregatte" bildet. Zu diesem Automation-Trägersystem-Schiff 33 gehört eine Automations-Zentrale 34, die im dargestellten Ausführungsbeispiel vier über einen Terminalbus 35 miteinander verbundene Terminals 36 aufweist. An diesen Terminalbus 35 sind mehrere redundant ausgeführte Server 37 angeschlossen, die andererseits an einen Systembus 38 angeschlossen sind. Über den Systembus 38 haben die Server Zugriff auf im dargestellten Ausführungsbeispiel drei Steuernetze 39, 40, 41, von denen das Steuernetz 39 dem ersten Schiffssicherungsbereich SSB-1, das Steuernetz 40 dem zweiten Schiffssicherungsbereich SSB-2 und das Steuernetz 41 den Schiffssicherungsbereichen SSB-3 und SSB-4 zugeordnet ist.

Mittels des Steuernetzes 39 werden die beiden POD-Antriebs-Segmente 2, 3, die beiden im ersten E-Werk achtern angeordneten Brennstoffzellen-Segmente 7, 8, der achtern angeordnete Dieselreformer 13 und die im heckseitigen ersten Schiffssicherungsbereich SSB-1 vorgesehene Schiffsbetriebstechnik 42 gesteuert und überwacht.

Mittels des Steuernetzes 40 werden die beiden gasturbinengetriebenen Generatoren 9, 10 im zweiten E-Werk, die beiden Waterjet-Antriebs-Segmente 4, 5 und die im schiffsmittigen, zweiten Schiffssicherungsbereich SSB-2 vorgesehene Schiffsbetriebstechnik 43 gesteuert und überwacht.

Entsprechend werden über das Steuernetz 41 die beiden im dritten E-Werk vorne angeordneten Brennstoffzellen-Segmente 11, 12, der vorne angeordnete Dieselreformer 14, das Querstrahlruder-Segment 6 und die im dritten SSB-3 und bugseitigen Schiffssicherungsbereich SSB-4 vorgesehene Schiffsbetriebstechnik 44 gesteuert und überwacht.

## Patentansprüche

1. Ausrüstungssystem-Schiffstyp "Fregatte" mit Standard-Ausrüstungs-Segmenten, wie einem Energieerzeuger-, einem Energieverteilungs-, einem Antriebs- und einem Automations-Segment, und mit einem Schiffskörper (1), der größen- und anforderungsspezifisch an den Ausrüstungssystem-Schiffstyp "Fregatte" angepasst ist, wobei
- zumindest ein Standard-Ausrüstungs-Segment wie das Energieerzeuger- und/oder das Energieverteilungs- und/oder das Antriebs- und/oder das Automations-Segment aus Standard-Einheiten bzw. -Komponenten aufgebaut ist, die entsprechend den Anforderungen an den Ausrüstungssystem-Schiffstyp "Fregatte" in dessen Schiffskörper (1) angeordnet und die in Schiffskörpern unterschiedlicher Ausrüstungssystem-Schiffstypen einbaubar sind und wobei
- das Antriebs-Segment aus einer Kombination von zwei POD-Antriebs-Segmenten (2, 3), die vorzugsweise als vollelektrische Leichtgewichts-POD-Antriebe ausgebildet sind und vorzugsweise eine Leistung von 6 bis 8, insbesondere 7 MW, aufweisen, und zwei Waterjet-Antriebs-Segmenten (4, 5), die vorzugsweise als Twin-Waterjet-Antriebe ausgebildet sind und vorzugsweise eine Leistung von 12 bis 16, insbesondere insgesant 14 MW, aufweisen, besteht und wobei
- das Energieverteilungs-Segment ein brennstoffzellengespeistes Fahrnetz (18, 19), mittels dem die POD-Antriebs-Segmente (2, 3) mit elektrischer Energie versorgbar sind, und ein generatorgespeistes Fahrnetz (21) aufweist, mittels dem die Waterjet-Antriebs-Segmente (4, 5) mit elektrischer Energie versorgbar sind und wobei
- das generatorgespeiste Fahrnetz (21) im wesentlichen dem schiffsmittigen, zweiten Schiffssicherungsbereich SSB-2 zugeordnet und mittels geeigneter Kopplungselemente (22, 23) mit dem brennstoffzellengespeisten Fahrnetz (18, 19) verbindbar ist.

2. Ausrüstungssystem-Schiffstyp "Fregatte" nach Anspruch 1, zu dessen Antriebs-Segment ein Querstrahlruder-Segment (6), vorzugsweise ein 0,5 MW-Bugstrahl-Thruster, gehört.

3. Ausrüstungssystem-Schiffstyp "Fregatte" nach Anspruch 1 oder 2, bei dem Elektromotoren der POD-Antriebs-Segmente (2, 3) und/oder der Waterjet-Antriebs-Segmente (4, 5) und/oder des Querstrahlruder-Segments (6) mit Wicklungen aus Hoch-Temperatur-Supraleitern ausgeführt sind.

4. Ausrüstungssystem-Schiffstyp "Fregatte" nach einem der Ansprüche 1 bis 3, bei dem die Elektromotoren der POD-Antriebs-Segmente (2, 3) und/oder der Waterjet-Antriebs-Segmente (4, 5) und/oder des Querstrahlruder-Segments (6) als Synchronmaschinen mit einer Feldwicklung aus Hoch-Temperatur-Supraleitern und die Ständerwicklungen als Luftspaltwicklungen ausgeführt sind.

5. Ausrüstungssystem-Schiffstyp "Fregatte" nach einem der Ansprüche 1 bis 4, dessen Waterjet-Antriebs-Segmente (4, 5) mit einem Koaxial-Abgas-Düsen-Segment ausgerüstet sind.

6. Ausrüstungssystem-Schiffstyp "Fregatte" nach einem der Ansprüche 1 bis 5, bei dem - in Längsrichtung - der Abstand zwischen der Mitte der POD-Antriebs-Segmente (2, 3) bzw. der Nase der Zugpropeller (17) der POD-Antriebs-Segmente (2, 3) einerseits und der Wasseraustrittöffnung der Gondeln der Waterjet-Antriebs-Segmente (4, 5) andererseits ca. 25 bis 35 m bzw. ca. 22 bis 32 m beträgt.

7. Ausrüstungssystem-Schiffstyp "Fregatte" nach einem der Ansprüche 1 bis 6, dessen Schiffskörper (1) im Hinterschiffsbereich strukturell so ausgeführt ist, dass mittels ihm das Gewicht der beiden POD-Antriebs-Segmente (2, 3) von jeweils z.B. ca. 65 to und der dazugehörigen Aggregate, wie Umrichter, Steuergeräte etc. von z.B. ca. 20 bis 30 to und die aufgrund des Betriebs der,beiden POD-Antriebs-Segmente (2, 3) auftretenden Axialkräfte festigkeitsmäßig aufnehmbar sind.

8. Ausrüstungssystem-Schiffstyp "Fregatte" nach einem der Ansprüche 1 bis 7, bei dem das Energieerzeuger-Segment aus einer Kombination von vorzugsweise vier Brennstoffzellen-Segmenten (7, 8, 11, 12), die vorzugsweise als luftatmende PEM-Brennstoffzellen mit einer Leistung von je ca. 4,5 MW Netto bzw. 6 MW Brutto ausgebildet sind, und/oder vorzugsweise zwei Generator-Segmenten (9, 10), vorzugsweise gasturbinengetriebenen Generatoren mit einer Leistung von jeweils ca. 16 MW, aufgebaut ist.

9. Ausrüstungssystem-Schiffstyp "Fregatte" nach Anspruch 8, dessen Energieerzeuger-Segment zusätzlich Hochleistungsbatterien aufweist, mittels denen die Brennstoffzellen-Segmente (7, 8, 11, 12) anfahrbar sind.

10. Ausrüstungssystem-Schiffstyp "Fregatte" nach Anspruch 8, oder 9, dessen Generatoren (9, 10) mit Wicklungen aus Hoch-Temperatur-Supraleitern ausgeführt sind.

11. Ausrüstungssystem-Schiffstyp "Fregatte" nach Ansprüche 8 oder 9, dessen Generatoren (9, 10) als Synchronmaschinen mit einer Feldwicklung aus Hoch-Temperatur-Supraleitern ausgeführt sind, wobei die Ständerwicklungen als Luftspaltwicklungen ausgeführt sind.

12. Ausrüstungssystem-Schiffstyp "Fregatte" nach einem der Ansprüche 8 bis 11, dessen vier luftatmenden PEM-Brennstoffzellen (7, 8, 11, 12) zur Wasserstoffversorgung zwei Dieselreformer (13, 14) mit einer Leistung von je ca. 9 MW zugeordnet sind.

13. Ausrüstungssystem-Schiffstyp "Fregatte" nach einem der Ansprüche 1 bis 12, dessen Energieerzeuger-Segment über mehrere Schiffssicherungsbereiche SSB-1, SSB-2, SSB-3 der Ausrüstungssystem-Schiffstyp "Fregatte" verteilt ist.

14. Ausrüstungssystem-Schiffstyp "Fregatte" nach einem der Ansprüche 9 bis 13, bei dem ein erstes E-Werk mit zwei luftatmenden PEM-Brennstoffzellen (7, 8) in einem heckseitigen, ersten Schiffssicherungsbereich SSB-1, vorzugsweise nahe dem Übergang zu einem schiffsmittigen, zweiten Schiffssicherungsbereich SSB-2, angeordnet ist.

15. Ausrüstungssystem-Schiffstyp "Fregatte" nach einem der Ansprüche 8 bis 14, bei dem ein zweites E-Werk, das sich in einen heckseitigen E-Werkabschnitt mit zwei Gasturbinen (15, 16) und einen bugseitigen E-Werkabschnitt mit den Generatoren (9, 10) gliedert, in einem schiffsmittigen, zweiten Schiffssicherungsbereich SSB-2 angeordnet ist.

16. Ausrüstungssystem-Schiffstyp "Fregatte" nach Anspruch 15, bei dem der heckseitige (15, 16) und der bugseitige E-Werkabschnitt (9, 10) des zweiten E-Werks in benachbarten Abteilungen VIII, IX des schiffsmittigen, zweiten Schiffssicherungsbereichs SSB-2 angeordnet sind.

17. Ausrüstungssystem-Schiffstyp "Fregatte" nach einem der Ansprüche 8 bis 16, bei dem ein drittes E-Werk mit zwei luftatmenden PEM-Brennstoffzellen (11, 12) in einem zwischen dem zweiten, schiffsmittigen Schiffssicherungsbereich SSB-2 und einem bugseitigen Schiffssicherungsbereich SSB-4 angeordneten dritten Schiffssicherungsbereich SSB-3, vorzugsweise nahe dem Übergang zum schiffsmittigen, zweiten Schiffssicherungsbereich SSB-2, angeordnet ist.

18. Ausrüstungssystem-Schiffstyp "Fregatte" nach einem der Ansprüche 8 bis 17, bei dem eine erste Dieselreformerzentrale mit einem Dieselreformer (13) im schiffsmittigen, zweiten Schiffssicherungsbereich SSB-2, vorzugsweise in der den bugseitigen E-Werkabschnitt (9, 10) des zweiten E-Werks aufnehmenden Abteilung IX desselben, angeordnet ist.

19. Ausrüstungssystem-Schiffstyp "Fregatte" nach einem der Ansprüche 8 bis 18, bei dem eine zweite Dieselreformerzentrale mit einem Dieselreformer (14) im zwischen dem schiffsmittigen, zweiten Schiffssicherungsbereich SSB-2 und dem bugseitigen Schiffssicherungsbereich SSB-4 angeordneten dritten Schiffssicherungsbereich SSB-3, vorzugsweise nahe dem Übergang zum bugseitigen Schiffssicherungsbereich SSB-4, angeordnet ist.

20. Ausrüstungssystem-Schiffstyp "Fregatte" nach einem der Ansprüche 1 bis 19, dessen POD-Antriebs-Segmente (2, 3) für eine Marschfahrt des Ausrüstungssystem-Schiffstyp "Fregatte", z.B. von ca. 22 kn, ausgelegt und in diesem Betriebszustand mittels der Brennstoffzellen-Segmente (7, 8, 11, 12) mit elektrischer Energie versorgbar sind.

21. Ausrüstungssystem-Schiffstyp "Fregatte" nach einem der Ansprüche 1 bis 20, dessen Waterjet-Antriebs-Segmente (4, 5) für eine Höchstfahrt des Ausrüstungssystem-Schiffstyp "Fregatte", z.B. von ca. 26 kn, ausgelegt und in diesem Betriebszustand mittels der beiden Generatoren (9, 10) mit elektrischer Energie versorgbar sind.

22. Ausrüstungssystem-Schiffstyp "Fregatte" nach einem der Ansprüche 1 bis 21, dessen Waterjet-Antriebs-Segmente (4, 5) zum emissionsarmen Anfahren derselben aus zumindest einem Brennstoffzellen-Segment (7, 8, 11, 12) bis zur Erreichung der Leistungsgrenze des bzw. der Brennstoffzellen-Segmente (7, 8, 11, 12) mit elektrischer Leistung versorgbar sind.

23. Ausrüstungssystem-Schiffstyp "Fregatte" nach einem der Ansprüche 1 bis 22, der bei gleichzeitigem Betrieb seiner POD-Antriebs-Segmente (2, 3) und seiner Waterjet-Antriebs-Segmente (4, 5) Geschwindigkeiten > 30 kn erreicht, wobei die Verteilung der mittels des Energieerzeuger-Segments erzeugten elektrischen Energie mittels des Energieverteilungs-Segments und eines Energiemanagements eines Automation-Trägersystem-Schiff (33) wirkungsgrad-optimiert realisierbar ist.

24. Ausrüstungssystem-Schiffstyp "Fregatte" nach Anspruch 1, bei dem das brennstoffzellengespeiste Fahrnetz (18, 19) einen heckseitigen Netzabschnitt (18), der im wesentlichen dem heckseitigen, ersten Schiffssicherungsbereich SSB-1 zugeordnet ist, und einen bugseitigen Netzabschnitt (19) aufweist, der im wesentlichen dem dritten Schiffssicherungsbereich SSB-3 zugeordnet und über geeignete Kopplungselemente (20) mit dem heckseitigen Netzabschnitt (18) verbindbar ist.

25. Ausrüstungssystem-Schiffstyp "Fregatte" nach Anspruch 24 oder 1, bei dem ein im bugseitigen Schiffssicherungsbereich SSB-4 angeordneter Hilfsantrieb (24) mittels des bugseitigen Netzabschnitts (19) des brennstoffzellengespeisten Fahrnetzes (18, 19) mit elektrischer Energie versorgbar ist.

26. Ausrüstungssystem-Schiffstyp "Fregatte" nach einem der Ansprüche 1 bis 25, bei dem Bordnetzverbraucher, z.B. Waffensystemeinheiten (25, 26) aus dem gesamten Energieerzeuger-Segment, vorteilhaft mittels des brennstoffzellengespeisten Fahrnetzes (18, 19) mit elektrischer Energie versorgbar sind.

27. Ausrüstungssysjm-Schiffstyp "Fregatte" nach einem der Ansprüche 1 bis 26, mit Niederspannungs-E-Werken (27, 28, 29), die in unterschiedlichen Schiffssicherungsbereichen SSB-1, SSB-2, SSB-3 angeordnet, an das jeweils zugeordnete Fahrnetz (18, 21, 19) angeschlossen und mittels geeigneter Kopplungselemente (30, 31, 32) untereinander verbindbar sind.

28. Ausrüstungssystem-Schiffstyp "Fregatte" nach einem der Ansprüche 1 bis 27, zu dessen Automations-Segment (33) eine eine Vielzahl Terminals (36) aufweisende Automations-Zentrale (34) mit einem Terminalbus (35) und eine Mehrzahl Server gehören, die an den Terminalbus (35) und an einen Systembus (38) angeschlossen sind, an den unterschiedlichen Schiffssicherungsbereichen SSB-1, SSB-2, SSB-3, SSB-4 zugeordnete Steuernetze (39, 40, 41) angeschlossen sind.

29. Ausrtistungssystem-Schiffstyp "Fregatte" nach Anspruch 28, mit einem im Wesentlichen dem heckseitigen, ersten Schiffssicherungsbereich SSB-1 zugeordneten ersten Steuernetz (39), dem die beiden POD-Antriebs-Segmente (2, 3), die beiden achtern angeordneten Brennstoffzellen-Segmente (7, 8), der achtern angeordnete Dieselreformer (13) und die im heckseitigen, ersten Schiffssicherungsbereich SSB-1 vorgesehene Schiffsbetriebstechnik (42) zugeordnet sind.

30. Ausrüstungssystem-Schiffstyp "Fregatte" nach Anspruch 28 oder 29, mit einem im Wesentlichen dem schiffsmittigen, zweiten Schiffssicherungsbereich SSB-2 zugeordneten zweiten Steuernetz (40), dem die beiden Generatoren (9, 10), die beiden Waterjet-Antriebs-Segmente (4, 5) und die im schiffsmittigen, zweiten Schiffssicherungsbereich SSB-2 vorgesehene Schiffsbetriebstechnik (43) zugeordnet sind.

31. Ausrüstungssystem-Schiffstyp "Fregatte" nach einem der Ansprüche 28 bis 30, mit einem im Wesentlichen dem dritten Schiffssicherungsbereich SSB-3 und dem bugseitigen Schiffssicherungsbereich SSB-4 zugeordneten dritten Steuernetz (41), dem die beiden vorne angeordneten Brennstoffzellen-Segmente (11, 12), der vorne angeordnete Dieselreformer (14), das Querstrahlruder-Segment (6) und die im dritten Schiffssicherungsbereich SSB-3 und bugseitigen Schiffssicherungsbereich SSB-4 vorgesehene Schiffsbetriebstechnik (44) zugeordnet sind.

## Claims

1. A "frigate" vessel-type equipment system having standard equipment segments, such as a power generator segment, a power distribution segment, a propulsion segment and an automation segment, and having a vessel hull (1) which is matched to the "frigate" vessel-type equipment system on a size and requirement-specific basis,
- at least one standard equipment segment, such as the power generator segment and/or the power distribution segment and/or the propulsion segment and/or the automation segment, being formed from standard units or components which are arranged in accordance with the requirements in the vessel hull (1) of the "frigate" vessel-type equipment system, and which can be installed in vessel hulls of different vessel-type equipment systems, and
- the propulsion segment comprising a combination of two POD propulsion segments (2, 3), which are preferably in the form of completely electrical lightweight POD propulsion systems and preferably have a power of 6 to 8, and in particular 7 MW, and have two waterjet propulsion segments (4, 5), which are preferably in the form of twin waterjet propulsion systems and preferably have a power of 12 to 16, in particular a total of 14 (2x7), MW, and
- in which case the power distribution segment has a propulsion network (18, 19) which is fed from fuel cells and by means of which the POD propulsion segments (2, 3) can be supplied with electrical power, and has a generator-fed propulsion network (21), by means of which the waterjet propulsion segments (4, 5) can be supplied with electrical power, and
- in which case the generator-fed propulsion network (21) is essentially associated with the midships, second vessel protection area SSB-2 and can be connected to the propulsion network (18, 19), which is fed by means of fuel cells, by means of suitable coupling elements (22, 23).

2. "Frigate" vessel-type equipment system according to Claim 1, whose propulsion segment includes a thruster segment (6), preferably a 0.5 MW bow jet thruster.

3. "Frigate" vessel-type equipment system according to Claim 1 or 2, in which electric motors in the POD propulsion segments (2, 3) and/or in the waterjet propulsion segments (4, 5) and/or in the thruster segment (6) are designed with windings composed of high-temperature superconductors.

4. "Frigate" vessel-type equipment system according to Claims 1 to 3, in which the electric motors in the POD propulsion segments (2, 3) and/or in the waterjet propulsion segments (4, 5) and/or in the thruster segment (6) are in the form of synchronous machines with a field winding composed of high-temperature superconductors, and with the stator windings being in the form of air-gap windings.

5. "Frigate" vessel-type equipment system according to Claims 1 to 4, whose waterjet propulsion segments (4, 5) are equipped with a coaxial exhaust-gas nozzle segment.

6. "Frigate" vessel-type equipment system according to Claims 1 to 5, in which - in the longitudinal direction - the distance between the center of the POD propulsion segments (2, 3) and the nose of the traction propeller (17) of the POD propulsion segment (2, 3) on the one hand, and the water outlet opening of the pods of the waterjet propulsion segments (4, 5) on the other hand is approximately 25 to 35 m, approximately 22 to 32 m.

7. "Frigate" vessel-type equipment system according to one of Claims 1 to 6, whose vessel hull (1) is structurally designed in the aft area such that it has the strength to hold the weight of the two POD propulsion segments (2, 3) which each, for example, weigh approximately 65 tonnes, as well as the associated units, such as converters, controllers etc. whose weight is, for example, approximately 20 to 30 tonnes, and to absorb the axial forces which occur as a result of the operation of the two POD propulsion segments (2, 3).

8. "Frigate" vessel-type equipment system according to one of Claims 1 to 7, in which the power generator segment is formed from a combination of preferably four fuel cell segments (7, 8, 11, 12), which are preferably in the form of air-breathing PEM fuel cells each having a power of approximately 4.5 MW net or 6 MW gross, and/or preferably two generator segments (9, 10), preferably gas-turbine-powered generators, each having a power of approximately 16 MW.

9. "Frigate" vessel-type equipment system according to Claim 8, whose power generator segment also has high-power batteries by means of which the fuel-cell segments (7, 8, 11, 12) can be started up.

10. "Frigate" vessel-type equipment system according to Claim 8 or 9, whose generators (9, 10) have windings composed of a high-temperature superconductor.

11. "Frigate" vessel-type equipment system according to Claim 8 or 9, whose generators (9, 10) are in the form of synchronous machines with a field winding composed of high-temperature superconductors, with the stator windings being in the form of air-gap windings.

12. "Frigate" vessel-type equipment system according to one of Claims 8 to 11, whose four air-breathing PEM fuel cells (7, 8, 11, 12) are associated, in order to supply them with hydrogen, with two diesel reformers (13, 14) each having a power of approximately 9 MW.

13. "Frigate" vessel-type equipment system according to one of Claims 1 to 12, whose power generator segment is distributed over a number of ship protection areas SSB-1, SSB-2 and SSB-3 in the "frigate" vessel type equipment system.

14. "Frigate" vessel-type equipment system according to Claims 9 to 13, in which a first electrical system with two air-breathing PEM fuel cells (7, 8) is arranged in a stern-end, first ship protection area SSB-1, preferably close to the transition to a midships, second vessel protection area SSB-2.

15. "Frigate" vessel-type equipment system according to one of Claims 8 to 14, in which a second electrical system, which is subdivided into a stern-end electrical system section with two gas turbines (15, 16) and a bow-end electrical system section with generators (9, 10), is arranged in a midships, second vessel protection area SSB-2.

16. "Frigate" vessel-type equipment system according to Claim 15, in which the stern-end (15, 16) electrical system section (9) and the bow-end electrical system section (10) of the second electrical system are arranged in adjacent compartments VIII, IX in the midships, second vessel protection area SSB-2.

17. "Frigate" vessel-type equipment system according to one of Claims 8 to 16, in which a third electrical system having two air-breathing PEM fuel cells (11, 12) is arranged in a third vessel protection area SSB-3, which is arranged between the second, midships vessel protection area SSB-2 and a bow-end vessel protection area SSB-4, preferably close to the transition to the midships, second vessel protection area SSB-2.

18. "Frigate" vessel-type equipment system according to one of Claims 8 to 17, in which a first diesel reformer center with a diesel reformer (13) is arranged in the midships, second vessel protection area SSB-2, preferably in its compartment IX which accommodates the bow-end electrical system section (9, 10) of the second electrical system.

19. "Frigate" vessel-type equipment system according to one of Claims 8 to 18, in which a second diesel reformer center with a diesel reformer (14) is arranged in the third vessel protection area SSB-3, which is arranged between the midships, second vessel protection area SSB-2 and the bow-end vessel protection area SSB-4, preferably close to the transition to the bow-end vessel protection area SSB-4.

20. "Frigate" vessel-type equipment system according to one of Claims 1 to 19, whose POD propulsion segments (2, 3) are designed for the "frigate" vessel-type equipment system to travel at a cruise speed of, for example, approximately 22 knots, and can be supplied with electrical power in this operating state by means of the fuel cell segments (7, 8, 11, 12).

21. "Frigate" vessel-type equipment system according to one of Claims 1 to 20, whose waterjet propulsion segments (4, 5) are designed for the "frigate" vessel-type equipment system to travel at a top speed of, for example, approximately 26 knots, and can be supplied with electrical power in this operating state by means of the two generators (9, 10).

22. "Frigate" vessel-type equipment system according to one of Claims 1 to 21, whose waterjet propulsion segments (4, 5) can be supplied with electrical power from at least one fuel cell segment (7, 8, 11, 12) until the power limit of the fuel cell segment or segments (7, 8, 11, 12) is reached in order to start up these waterjet propulsion segments (3, 4) with low emissions.

23. "Frigate" vessel-type equipment system according to one of Claims 1 to 22, which achieves speeds of more than 30 knots by operating its POD propulsion segments (2, 3) and its waterjet propulsion segments (4, 5) simultaneously, in which case the distribution of the electrical power which is produced by means of the power generator segment can be achieved with optimized efficiency by means of the power distribution segment and energy management for an automation carrier system vessel (33).

24. "Frigate" vessel-type equipment system according to Claim 1, in which the propulsion network (18, 19) which is fed from fuel cells has a stern-end network section (18) which is essentially associated with the stern-end, first vessel protection area SSB-1, and has a bow-end network section (19) which is essentially associated with the third vessel protection area SSB-3 and can be connected to the stern-end network section (18) via suitable coupling elements (20).

25. "Frigate" vessel-type equipment system according to Claim 24 or 1, in which an auxiliary propulsion system (24), which is arranged in the bow-end vessel protection area SSB-4, can be supplied with electrical power by means of the bow-end network section (19) of the propulsion network (18, 19) which is fed by means of fuel cells.

26. "Frigate" vessel-type equipment system according to one of Claims 1 to 25, in which on-board network loads, for example weapon system units (25, 26), can be supplied with electrical power from the entire power generation segment, advantageously by means of the propulsion network (18, 19) which is fed by means of fuel cells.

27. "Frigate" vessel-type equipment system according to one of Claims 1 to 26, having low-voltage electrical systems (27, 28, 29), which are arranged in various vessel protection areas SSB-1, SSB-2, SSB-3 can be connected to the respectively associated propulsion network (18, 21, 19) and can be connected to one another by means of suitable coupling elements (30, 31, 32).

28. "Frigate" vessel-type equipment system according to one of Claims 1 to 27, whose automation segment (33) includes an automation center (34) which has a large number of terminals (36) and a terminal bus (35), and has two or more servers which are connected to the terminal bus (35) and to a system bus (38), and to which control networks (39, 40, 41) which are associated with different vessel protection areas SSB-1, SSB-2, SSB-3 and SSB-4 are connected.

29. "Frigate" vessel-type equipment system according to Claim 28, having a first control network (39) which is essentially associated with the stern-end, first vessel protection area SSB-1 and with which the two POD propulsion segments (2, 3), the two fuel-cell segments (7, 8) which are arranged astern, the diesel reformer (13) which is arranged astern, and the vessel protection engineering (42) which is provided in the stern-end, first vessel protection area SSB-1 are associated.

30. "Frigate" vessel-type equipment system according to Claim 28 or 29, having a second control network (40), which is essentially associated with the midships, second vessel protection area SSB-2 and with which the two generators (9, 10), the two waterjet propulsion segments (4, 5) and the vessel operating engineering (43), which is provided in the midships, second vessel protection area SSB-2, are associated.

31. "Frigate" vessel-type equipment system according to Claims 28 to 30, having a third control network (41), which is essentially associated with the third vessel protection area SSB-3 and the bow-end vessel protection area SSB-4 and with which the two fuel cell segments (11, 12) which is arranged in the bow, the diesel reformer (14), which are arranged in the bow, the thruster segment (6) and the vessel operating engineering (44) which is provided in the third vessel protection area SSB-3 and in the bow-end vessel protection area SSB-4 are associated.

## Revendications

1. Navire de type 'Frégate' avec armement, comprenant des segments d'armement standard tel qu'un segment de production d'énergie, un segment de distribution d'énergie, un segment de propulsion et un segment d'automation, et une coque de navire (1) qui est adaptée spécifiquement, du point de vue des dimensions et des exigences, au navire de type 'Frégate' avec armement, dans lequel
- au moins un segment d'armement standard tel que le segment de production d'énergie et/ou le segment de distribution d'énergie et/ou le segment de propulsion et/ou le segment d'automation est élaboré à partir d'unités respectivement de composants standards qui sont placés, conformément aux exigences imposées au navire de type 'Frégate' avec armement, dans la coque (1) de ce navire et qui peuvent être incorporés dans des coques de différents types de navire avec armement, et dans lequel
- le segment de propulsion est constitué d'une combinaison de deux segments de propulsion POD (2, 3) qui sont avantageusement conformés en dispositifs de propulsion POD entièrement électriques, de poids léger, et qui ont avantageusement une puissance de 6 à 8 MW, notamment 7 MW, et qui comportent deux segments de propulsion POD à hydrojet (4, 5) qui sont avantageusement conformés en dispositifs de propulsion à double hydrojet et qui ont avantageusement une puissance de 12 à 16 MW, notamment au total 14 MW, et dans lequel
- le segment de distribution d'énergie comporte un réseau de propulsion (10, 19) qui est alimenté par des piles à de combustible et qui permet d'alimenter les segments de propulsion POD (2, 3) en énergie électrique, et un réseau de propulsion (21) qui est alimenté par un générateur et qui permet d'alimenter les segments de propulsion à hydrojet (4, 5) en énergie électrique, et dans lequel
- le réseau de propulsion (21), alimenté par un générateur, est essentiellement associé à la deuxième zone de sécurité de navire SSB-2 située au milieu du navire, et peut être relié au réseau de propulsion (18, 19), alimenté par des cellules de combustible, au moyen d'éléments de couplage appropriés (22, 23).

2. Navire de type 'Frégate' avec armement selon la revendication 1, dans lequel le segment de propulsion possède un segment d'hélice de gouvernail à action transversale (6), avantageusement un propulseur d'étrave de 0,5 MW.

3. Navire de type 'Frégate' avec armement selon la revendication 1 ou la revendication 2, dans lequel des moteurs électriques des segments de propulsion POD (2, 3) et/ou des segments de propulsion à hydrojet (4, 5) et/ou du segment d'hélice de gouvernail à action transversale (6) sont réalisés avec des enroulements en matériaux supraconducteurs de haute température.

4. Navire de type 'Frégate' avec armement selon l'une des revendications 1 à 3, dans lequel les moteurs électriques des segments de propulsion POD (2, 3) et/ou des segments de propulsion à hydrojet (4, 5) et/ou du segment d'hélice de gouvernail à action transversale (6) sont réalisés sous la forme de machines synchrones comportant un enroulement de champ en matériaux supraconducteurs à haute température et les enroulements de stator sont réalisés sous la forme d'enroulement d'entrefer.

5. Navire de type 'Frégate' avec armement selon l'une des revendications 1 à 4, dans lequel les segments de propulsion à hydrojet (4, 5) sont équipés d'un segment de buse de gaz d'échappement coaxial.

6. Navire de type 'Frégate' avec armement selon l'une des revendications 1 à 5, dans lequel la distance, dans la direction longitudinale, entre le milieu des segments de propulsion POD (2, 3) respectivement du nez de l'hélice de traction (17) des segments de propulsion POD (2, 3) d'une part et l'ouverture de sortie d'eau des nacelles des segments de propulsion à hydrojet (4, 5) d'autre part est comprise entre 25 et 30 m environ respectivement entre 22 et 32 m environ.

7. Navire de type 'Frégate' avec armement selon l'une des revendications 1 à 8, dans lequel la coque de navire (1) est réalisée structurellement, dans la région arrière du navire, de telle sorte que le poids des deux segments de propulsion POD (2, 3) de par exemple 65 tonnes environ chacun et celui des unités associées, tel que des convertisseurs, des appareils de commande etc. de par exemple 20 à 30 tonnes environ et les forces axiales engendrées par le fonctionnement des deux segments de propulsion POD (2, 3) peuvent être supportés grâce à la résistance mécanique de ladite coque de navire.

8. Navire de type 'Frégate' avec armement selon l'une des revendications 1 à 7, dans lequel le segment de production d'énergie est constitué d'une combinaison d'avantageusement quatre segments de cellule de combustible (7, 8, 11, 12), qui sont avantageusement conformés en cellules de combustible PEM aérobie d'une puissance d'environ 4,5 MW net ou 6 MW brut chacune, et/ou avantageusement de deux segments de générateur (9, 10), avantageusement des générateurs entraînées par turbine à gaz d'une puissance d'environ 16 MW chacun.

9. Navire de type 'Frégate' avec armement selon la revendication 8, dans lequel le segment de production d'énergie comporte en plus des batteries de grande puissance permettant de démarrer les segments de cellule de combustible (7, 8, 11, 12).

10. Navire de type 'Frégate' avec armement selon la revendication 8 ou 9, dans lequel les générateurs (9, 10) sont réalisées avec des enroulements en matériaux supraconducteurs de haute température.

11. Navire de type 'Frégate' avec armement selon la revendication 8 ou 9, dans lequel les générateurs (9, 10) sont réalisées sous la forme de machines synchrones comportant un enroulement de champ en matériaux supraconducteurs de haute température, les enroulements de stator étant réalisés sous la forme d'enroulement d'entrefer.

12. Navire de type 'Frégate' avec armement selon l'une des revendications 8 à 11, dans lequel deux reformeurs diesel (13, 14) d'une puissance d'environ 9 MW chacun sont associés à quatre cellules de combustible PEM aérobie (7, 8, 11, 12) pour l'alimentation en hydrogène.

13. Navire de type 'Frégate' avec armement selon l'une des revendications 1 à 12, dans lequel le segment de production d'énergie est réparti en plusieurs zones de sécurité de navire SSB-1, SSB-2, SSB-3 du navire de type 'Frégate' avec armement.

14. Navire de type 'Frégate' avec armement selon l'une des revendications 9 à 13, dans lequel la première centrale électrique comportant deux cellules de combustible PEM aérobie (7, 8) est placée dans une première zone de sécurité de navire SSB-1 située à l'arrière, avantageusement près de la transition vers une deuxième zone de sécurité de navire SSB-2 située au milieu du navire.

15. Navire de type 'Frégate' avec armement selon l'une des revendications 8 à 14, dans lequel une deuxième centrale électrique, qui est divisée en une portion de centrale électrique arrière comportant deux turbines à gaz (15, 16) et en une portion de centrale électrique avant comportant les générateurs (9, 10), est placée dans une deuxième zone de sécurité de navire SSB-2 située au milieu du navire.

16. Navire de type 'Frégate' avec armement selon la revendication 15, dans lequel la portion de centrale électrique arrière (15, 16) et la portion de centrale électrique avant (9, 10) de la deuxième centrale électrique sont placées dans des compartiments adjacents VIII, IX de la deuxième zone de sécurité de navire SSB-2 située au milieu du navire.

17. Navire de type 'Frégate' avec armement selon l'une des revendications 8 à 16, dans lequel une troisième centrale électrique, comportant deux cellules de combustible PEM aérobie (11, 12) est placée dans une troisième zone de sécurité de navire SSB-3 entre la deuxième zone de sécurité de navire SSB-2 située au milieu du navire et une zone de sécurité de navire SSB-4 située à l'avant, avantageusement près de la transition vers la deuxième zone de sécurité de navire SSB-2 située au milieu du navire.

18. Navire de type 'Frégate' avec armement selon l'une des revendications 8 à 17, dans lequel une première centrale de reformeur diesel, comportant un reformeur diesel (13), est placée dans la deuxième zone de sécurité de navire SSB-2 située au milieu du navire, avantageusement dans le compartiment IX recevant la portion de centrale électrique avant (9, 10) de la deuxième centrale électrique.

19. Navire de type 'Frégate' avec armement selon l'une des revendications 8 à 18, dans lequel une deuxième centrale de reformeur diesel, comportant un reformeur diesel (14), est placée dans la troisième zone de sécurité de navire SSB-3 située entre la deuxième zone de sécurité de navire SSB-2 située au milieu du navire et la zone de sécurité de navire avant SSB-4, avantageusement près de la transition vers la zone de sécurité de navire avant SSB-4.

20. Navire de type 'Frégate' avec armement selon l'une des revendications 1 à 19, dans lequel les segments de propulsion POD (2, 3) sont conçus pour une allure de croisière du navire de type 'Frégate' avec armement, par exemple d'environ 22 Nd, et, dans cet état de fonctionnement, peuvent être alimentés en énergie électrique par les segments de cellule de combustible (7, 8, 11, 12).

21. Navire de type 'Frégate' avec armement selon l'une des revendications 1 à 20, dans lequel les segments de propulsion à hydrojet (4, 5) sont conçus pour une allure maximale du navire de type 'Frégate' avec armement, par exemple d'environ 26 Nd, et, dans cet état de fonctionnement, peuvent être alimentés en énergie électrique par les deux générateurs (9, 10)

22. Navire de type 'Frégate' avec armement selon l'une des revendications 1 à 21, dans lequel les segments de propulsion à hydrojet (4, 5) peuvent être alimentés en énergie électrique par au moins un segment de cellule de combustible (7, 8, 11, 12) pour démarrer lesdits segments de propulsion à hydrojet avec peu d'émission jusqu'à atteindre la limite de puissance du ou des segments de cellule de combustible (7, 8, 11, 12).

23. Navire de type 'Frégate' avec armement selon l'une des revendications 1 à 22, lequel navire atteint des vitesses supérieures à 30 Nd lorsque ses segments de propulsion POD (2, 3) et ses segments de propulsion à hydrojet (4, 5) fonctionnent simultanément, la répartition de l'énergie électrique produite par le segment de production d'énergie pouvant être effectuée avec un rendement optimale au moyen du segment de distribution d'énergie et d'un dispositif de gestion d'énergie d'un navire à système d'automation.

24. Navire de type 'Frégate' avec armement selon la revendication 1, dans lequel le réseau de propulsion (18, 19) alimenté par des cellules de combustible comporte une portion de réseau arrière (18), qui est associée essentiellement à la première zone de sécurité de navire arrière SSB-1, et une portion de réseau avant (19), qui est associée essentiellement à la troisième zone de sécurité de navire SSB-3 et qui peut être reliée à la portion de réseau arrière (18) par des éléments de couplage appropriés (20).

25. Navire de type 'Frégate' avec armement selon la revendication 24 au 1, dans lequel un dispositif de propulsion auxiliaire (24), placé dans la zone de sécurité de navire avant SSB-4, peut être alimenté en énergie électrique au moyen de la portion de réseau avant (19) du réseau de propulsion (18, 19) alimenté par des cellules de combustible.

26. Navire de type 'Frégate' avec armement selon l'une des revendications 1 à 25, dans lequel des récepteurs de réseau de bord, par exemple des unités de système d'armes (25, 26), peuvent être alimentés en énergie électrique à partir de tout le segment de génération d'énergie, avantageusement au moyen du réseau de propulsion (18, 19) alimenté par des cellules de combustible.

27. Navire de type 'Frégate' avec armement selon l'une des revendications 1 à 26, comportant des centrales électriques basse tension (27, 28, 29) qui sont placées dans différentes zones de sécurité de navire SSB-1, SSB-2, SSB-3, qui sont raccordées au réseau de propulsion (18, 21, 19) associée à chacune d'elles et qui peuvent être reliées entre elles par des éléments de couplage appropriées (30, 31, 32).

28. Navire de type 'Frégate' avec armement selon l'une des revendications 1 à 27 dans lequel le segment d'automation (33) possède une centrale d'automation (34), comportant un grand nombre de terminaux (36), un bus de terminal (35) et une pluralité de serveurs qui sont raccordés au bus de terminal (35) et à un bus de système (38) auquel sont raccordés des réseaux de commande (39, 40, 41) associés aux différentes zones de sécurité de navire SSB-1, SSB-2, SSB-3, SSB-4.

29. Navire de type 'Frégate' avec armement selon la revendication 28, comportant un premier réseau de commande (39), qui est associé essentiellement à la première zone de sécurité de navire arrière SSB-1 et auquel sont associés les deux segments de propulsion POD (2, 3), les deux segments de cellules de combustible arrière (7, 8), le reformeur diesel arrière (13) et la technique de fonctionnement de navire (42) prévue dans la première zone de sécurité de navire arrière SSB-1.

30. Navire de type 'Frégate' avec armement selon la revendication 28 ou 29, comportant un deuxième réseau de commande (40), qui est associé essentiellement à une deuxième zone de sécurité de navire SSB-2, située au milieu du navire, et auquel sont associés les deux segments de propulsion à hydrojet (4, 5) et la technique de fonctionnement de navire (43) prévue dans la deuxième zone de sécurité de navire SSB-2 située au milieu du navire.

31. Navire de type 'Frégate' avec armement selon l'une des revendications 28 à 30, comportant un troisième réseau de commande (41), qui est associé essentiellement à la troisième zone de sécurité de navire SSB-3 et à la zone de sécurité de navire avant SSB-4 et auquel sont associés les deux segments de cellules de combustible avant (11, 12), le reformeur diesel avant (14), le segment d'hélice de gouvernail à action transversale (6) et la technique de fonctionnement de navire (44) prévue dans la troisième zone de sécurité de navire SSB-3 et la zone de sécurité de navire avant SSB-4.
